# EUROPÄISCHE PATENTSCHRIFT

(11) **EP 1 360 703 B1**
(45) Veröffentlichungstag und Bekanntmachung des Hinweises auf die Patenterteilung: **02.12.2009**
(21) Anmeldenummer: 02718013.2
(22) Anmeldetag: 10.01.2002
(51) Int. Cl.: H01B 13/14

(54) **VERFAHREN ZUR HERSTELLUNG EINES KABELS**
METHOD FOR PRODUCING A CABLE
PROCEDE DE PRODUCTION D'UN CABLE

(30) Priorität: 03.02.2001 DE 10104994
(43) Veröffentlichungstag der Anmeldung: 12.11.2003
(73) Patentinhaber: SIKORA AG, 28307 Bremen (DE)
(72) Erfinder: SIKORA, Harald, 28357 Bremen (DE)
(74) Vertreter: Hauck Patent- und Rechtsanwälte
(86) Internationale Anmeldenummer: PCT/EP2002/000154
(87) Internationale Veröffentlichungsnummer: WO 2002/063639

(56) Entgegenhaltungen:
- US-A- 4 457 975
- US-A- 5 431 759

## Beschreibung

Die Erfindung bezieht sich auf ein Verfahren zur Herstellung eines Kabels nach dem Oberbegriff des Patentanspruchs 1.

Elektrische Kabel für die Energieübertragung haben grundsätzlich einen gleichen Aufbau in der Weise, dass mindestens ein zentrisch geführter Leiter vorgesehen ist, der von mindestens einem Mantel oder einer Schicht aus elektrisch isolierendem Material umhüllt ist. Es ist auch ein mehrschichtiger Aufbau eines Kabelmantels bekannt, wobei eine oder mehrere Schichten aus halbleitendem Material bestehen, die zu feldsteuernden und Abschirmeffekten verwendet werden. Derartige Schichten sind zumeist deutlich dünner als die eigentlichen Isolationsschichten. Es ist auch bekannt, den Kabelmantel mit einer geflechtartigen Abschirmung aus metallischem Material zu umgeben oder mit einem leitenden Mantel. Auf den Aufbau abhängig von den Übertragungsbedingungen der verschiedenen Kabel soll hier nicht eingegangen werden, da er allgemein bekannt und auch nicht Gegenstand der nachfolgend zu beschreibenden Erfindung ist. Außerdem wird nachstehend von dem einfachsten Aufbau eines Kabels ausgegangen, nämlich einem mittigen Leiter und einem einschichtigen Kabelmantel. Es versteht sich, dass alle Beschreibungen auch alle anderen Kabelaufbauten abdecken.

Seit längerem werden die Isolationsschichten bei elektrischen Kabeln aus Kunststoffmaterial gefertigt, beispielsweise aus PVC, Polyethylen (PE) oder einem geeigneten Elastomer. Das Kunststoffmaterial wird mit Hilfe eines Extruders auf den Leiter extrudiert, wie dies etwa in US 3 479 446, US 458 407 oder auch EP 0 507 988 A1 beschrieben ist (es existiert eine große Anzahl von Dokumenten zu diesem Stand der Technik, und die angegebenen stellen nur eine kleine beispielhafte Aufzählung dar). Um dem Kabelmantel die nötigen mechanischen Eigenschaften, insbesondere mechanische und elektrische Festigkeit zu verleihen, ist erforderlich, das Kunststoffmaterial zu vernetzen bzw. vulkanisieren (cross linking). Hierbei werden die langkettigen Kunststoffmoleküle über Querverbindungen miteinander verbunden. Das Vernetzen derartiger Kunststoffmäntel erfolgt unter Druck und mit erhöhter Temperatur. Die Vernetzung ist als abgeschlossen zu betrachten, wenn jedes Volumenelement des Kabelmantels eine vorgegebene Temperatur von etwa 190°C erreicht hat. In dem zu vernetzenden Kunststoffmaterial ist eine gewisse Menge Gas eingeschlossen, das bei der Erwärmung des Kabelmantels mehr oder weniger ausgetrieben wird. Ein derartiges Austreiben des Gases verursacht Bläschen oder Poren in der Isolation und ggf. Unebenheiten am Außenumfang des Kabelmantels, wodurch die elektrophysikalischen Eigenschaften des Kabelmantels beeinträchtigt werden. Es ist daher bekannt, während des Vernetzungsvorgangs um den Kabelmantel herum einen Gegendruck zu erzeugen, der ausreicht, eine Blasenbildung zu unterbinden. Ein solcher Gegendruck wird zum Beispiel mit Hilfe einer den Kabelmantel umgebenden Gasatmosphäre erzeugt. Hierfür wird ein langes Rohr verwendet, in das der extrudierte Kabelmantel unter Abdichtung eingeleitet wird. Im Rohr wird die nötige Temperatur erzeugt sowie ein ausreichender Druck, der oberhalb des partiellen Gasdrucks bei Vernetzungstemperatur im Kabelmantel liegt. Es ist bekannt, Dampf bzw. gesättigten Dampf in ein derartiges Vulkanisations- oder CV-Rohr einzuleiten. Mit Hilfe des erhitzten Dampfes wird der Kabelmantel zugleich auf Vernetzungstemperatur gebracht. Es ist auch bekannt, statt Dampf Stickstoff zu verwenden. In einem solchen Fall erfolgt die Erwärmung auf andere Weise, beispielsweise durch Wärmestrahlung, induktive Erwärmung des Kabels usw. Nach dem Vernetzen wird das Kabel in einer sogenannten Kühlstrecke, die vorzugsweise Wasser enthält, unter Druck abgekühlt, bevor es auf einer geeigneten Haspel oder Trommel aufgewickelt wird. Sollen gewisse Fertigungsgeschwindigkeiten erreicht werden, ist erforderlich, die Vemetzungsstrecke relativ lang zu machen, insbesondere bei dickerwandigen Kabelmänteln, da es naturgemäß einer gewissen Zeit bedarf, bis sich über den gesamten Radius des Kabelmantels mindestens die Vernetzungstemperatur eingestellt hat. So sind so genannte CV-Rohre oder Vulkanisationsrohre von 100 m Länge und mehr keine Seltenheit. Es versteht sich, dass derartige Produktionseinlagen eine entsprechend große Fabrikationsstätte erfordern. Es ist auch bekannt, derartige Anlagen vertikal anzuordnen. Bei horizontaler Anordnung weisen sie zumeist ein Gefälle auf. Dies erfordert entsprechende bauliche Einrichtungen.

Aus US-A-5,431,759 ist ein Verfahren zur Herstellung eines Kabels mit mindestens einem Leiter und mindestens einem den Leiter umgebenden Mantel aus isolierendem Kunststoffmaterial bekannt geworden, bei dem das Kunststoffmaterial durch Extrusion auf den Leiter aufgebracht und anschließend in einer rohrartigen Hülle durch Zufuhr von Wärme vernetzt wird. Nach der Extrusion wird eine Hülle fortlaufend um den Kabelmantel herum erzeugt, um den für die Vernetzung erforderlichen Gegendruck im Kabelmantel zu gewährleisten. Die Extrusion der Hülle um den Kabelmantel erfolgt jedoch nicht unmittelbar im Anschluss an die Extrusion des Kabelmantels, vielmehr wird bei dem bekannten Verfahren in einer ersten Stufe auf übliche Weise mit Hilfe eines Druckrohres vernetzt. In einer zweiten Stufe erfolgt die Vernetzung endgültig innerhalb der besagten Hülle. Das bekannte Verfahren erfordert daher ein Vernetzungs- oder Vulkanisierrohr.

Der Erfindung liegt die Aufgabe zugrunde, ein Verfahren zur Herstellung eines Kabels anzugeben, bei dem der Vernetzungsvorgang einfacher und weniger aufwändig durchgeführt werden kann.

Diese Aufgabe wird durch die Merkmale des Patentanspruchs 1 oder 2 gelöst.

Beim erfindungsgemäßen Verfahren nach Patentanspruch 1 wird unmittelbar nach der Extrusion des Kabelmantels eine rohr- oder schlauchförmige Hülle fortlaufend um den Kabelmantel herum erzeugt, und zwar in so innigem Kontakt zu diesem, dass aufgrund der Temperaturerhöhung ein Gegendruck auf dem Kabelmantel erzeugt wird, der trotz des partiellen Gasdruckes nicht zur Gasbläschenbildung im Kabelmantel führt.

Bei dem Verfahren nach Patentanspruch 2 liegt die Hülle im radialen Abstand zum Kabelmantel, und in den Zwischenraum wird ein gasförmiges, flüssiges oder festes Medium eingeführt, das einen Gegendruck erzeugt, um dem partiellen Gasdruck im Kabelmantel entgegenzuwirken.

Erfindungswesentlich ist, dass das in dem Stand der Technik verwendete CV- oder Vulkanisationsrohr ersetzt wird durch eine ständig mit dem Kabel neu zu produzierende Hülle, und in einer solchen Hülle werden dann die Maßnahmen durchgeführt, die zum Vernetzen des Kabelmantels erforderlich sind, nämlich Erzeugung einer ausreichenden Wärme im Kabelmantel und eines ausreichenden Gegendrucks, um die Bildung von Gasbläschen aus dem Kabelmantel zu verhindern.

Liegt die Hülle in innigem Kontakt an der Außenseite des Kabelmantels an und weist die Hülle eine ausreichende radiale Festigkeit auf, kann bereits dadurch der erforderliche Gegendruck erzeugt werden, dass die thermische Dehnung des Kabelmantels einen entsprechenden Gegendruck in der Hülle hervorruft, die ihrerseits eine gewisse Dehnung aufgrund seiner Elastizität erfahren kann. Natürlich kann die Hülle von vornherein auch unter Spannung mit dem Kabelmantel aufgebracht sein, so dass ein Gegendruck bereits bei niedrigen Temperaturen erzeugt ist. Der aufgrund der Temperaturerhöhung ansteigende partielle Gasdruck im Kabelmantel führt nicht zur Gasbläschenbildung, da ein entsprechender Gegendruck von der Hülle aufgebracht wird. Alternativ ist zwischen Hülle und Kabelmantel ein ringförmiger Zwischenraum, in den Gas oder Wasserdampf unter Druck eingeleitet wird, ähnlich der Druckatmosphäre in einem CV-Rohr. Der Druck des Gasmediums kann auch gering sein, weil er sich durch Erwärmung stark erhöhen kann. Eine weitere Möglichkeit besteht darin, in den Spalt eine Flüssigkeit oder eine feste Substanz einzugeben. Hierbei ist ebenfalls möglich, aber nicht erforderlich, dieses Mittel unter Druck zu setzen.

Wenn vor- und nachstehend davon gesprochen wird, dass bezüglich der Hülle und der Behandlung des Kabelmantels bestimmte konstruktive und/oder physikalische Maßnahmen durchgeführt werden, dann versteht sich, dass dies auch nur für einen bestimmten Längenabschnitt der Hülle gelten kann.

Die Hülle wird vorzugsweise durch Extrusion erzeugt. Hierfür kann ein weiterer Extruder vorgesehen werden, der im Anschluss an den Extruder angeordnet ist zum Aufbringen des Kabelmantels. Alternativ kann auch eine Koextrusion von Kabelmantel und Hülle stattfinden.

Eine andere Möglichkeit besteht darin, die Hülle zumindest teilweise durch Wickeln, Flechten, Umbändem oder dergleichen mit einem geeigneten Material zu erzeugen. Als geeignetes Material kann auch metallisches Material verwendet werden oder ein Material, das durch ein geeignetes metallisches Material bewehrt oder armiert ist.

Eine andere Ausgestaltung sieht vor, dass die Hülle als gewelltes Rohr erzeugt wird. Wellkohre sind für verschiedene Anwendungszwecke allgemein bekannt. Sie haben den Vorteil, dass sie relativ flexibel sind und bei geringem Materialverbrauch eine hohe radiale Steifigkeit aufweisen.

Die Hülle kann auch aus mehreren Schichten aufgebaut sein, wobei die Schichten durch eine Zwischenschicht aus einer Gas- oder Flüssigkeitsschicht voneinander getrennt sein können. In dieser Schicht kann von vornherein ein entsprechender Druck aufgebaut oder durch die thermische Dehnung des Kabelmantels und/oder des Mediums erzeugt werden.

Die Erwärmung des Kabelmantels lässt sich auf unterschiedliche Weise durchführen, wie sie Stand der Technik ist, etwa durch Strahlungswärme, Kontaktwärme, induktive Erwärmung, durch Dampf oder auch durch Kombinationen der verschiedensten Erwärmungsmethoden. Hierbei hat die Verwendung der erfindungsgemäßen Hülle den Vorteil, dass es möglich ist, die Wärme auf wirksamere Art und Weise auf den Kabelmantel zu übertragen, so dass die Wärmeverluste signifikant niedriger als bei herkömmlichen Verfahren sind.

Alternativ kann die Erwärmung ganz oder teilweise durch einen Stromfluss im Leiter bewirkt werden, und zwar unmittelbar während der Produktion oder zu einem späteren Zeitpunkt, z.B. erst während des Einsatzes nach der Verlegung des Kabels.

Die erfindungsgemäße Hülle kann später auf dem Kabel verbleiben oder entfernt werden. In letzterem Fall ist das Material der Hülle vorzugsweise wiederverwendbar, und zwar entweder für die Herstellung einer Hülle oder zu anderen Zwecken. Verbleibt die Hülle auf dem Kabel, kann sie beim Einsatz verschiedene Funktionen einzeln oder in Kombination erfüllen. Eine besteht z.B. darin, dass sie das Kabel gegen mechanische Beanspruchungen und gegen Eindringen von Flüssigkeit oder Gas schützt. Eine andere Möglichkeit ist, die Hülle elektrisch leitend zu machen. Sie kann dann als Abschirmung dienen oder auch als Rückleiter.

Verbleibt die Hülle auf dem Kabel, ist es vorteilhaft, wenn die Hülle so aufgerührt ist, dass sie ein Entgasen des Kabelmantels erlaubt. Bekanntlich findet auch nach dem Erkalten des Kabelmantels über einen sehr langen Zeitraum der Austritt von Gas aus dem Kabelmantel statt. Daher sieht eine Ausgestaltung der Erfindung vor, dass die Hülle so strukturiert bzw. eine Vielzahl von radialen feinen Durchlässen aufweist, wodurch eine spätere Entgasung des Kabelmantelmaterials möglich ist. Alternativ kann der Leiter so aufgebaut sein, dass über diesen die Entgasung abläuft. Schließlich kann Gas auch dadurch entfernt werden, dass der Zwischenraum zwischen Kabelmantel und Hülle mit einem anderen Gas gespült wird.

Das erfindungsgemäße Verfahren ermöglicht eine weniger aufwendige Herstellung eines elektrischen Kabels. Insbesondere sind die räumlichen und baulichen Voraussetzungen weitaus günstiger als bei herkömmlichen Verfahren. So ist auch möglich, Kabel unmittelbar am Ort der Verlegung herzustellen, auch mobil auf Fahrzeugen und auf Schiffen. Die Erfindung lässt die kontinuierliche Erzeugung des Kabels in gewünschter Länge zu. Kabelverbinder, wie sie herkömmlich zwischen begrenzten verlegten Kabellängen erforderlich sind, entfallen. Kabelverbinder erhöhen den Verlegeaufwand beträchtlich und sind defektträchtig.

Die Erfindung wird nachfolgend anhand von zwei in Zeichnungen dargestellten Ausführungsbeispielen näher erläutert.
- Fig. 1: zeigt äußerst schematisch die Herstellung eines Kabelmantels mit einer Hülle nach der Erfindung.
- Fig. 2: zeigt eine andere Ausführungsform der Herstellung eines Kabels mit einer Hülle nach der Erfindung.

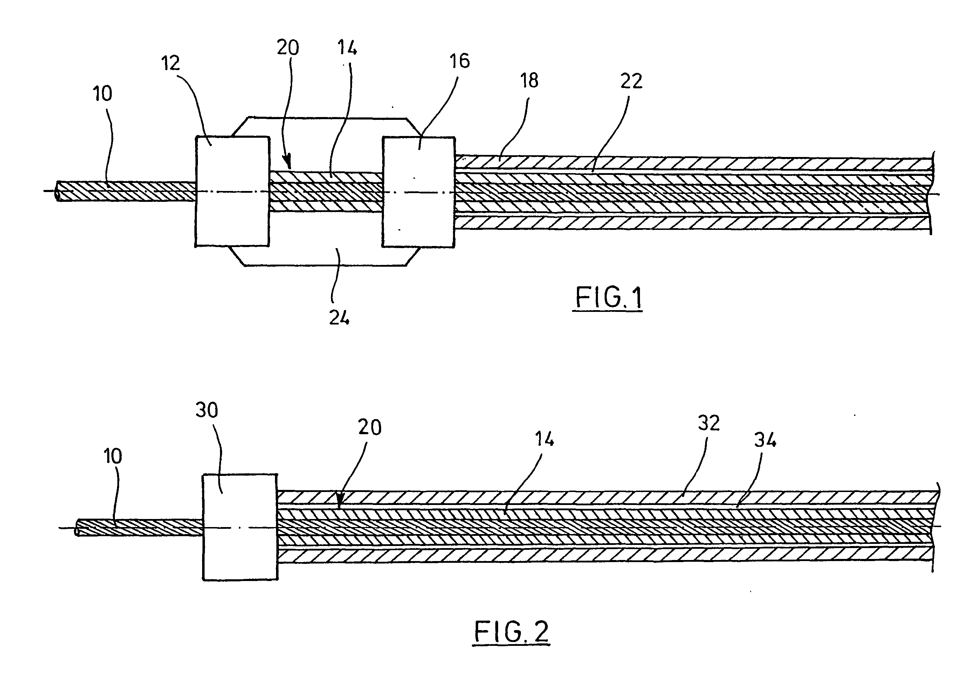

In Fig. 1 ist zu erkennen, wie ein Leiter 10 für ein Kabel, das aus einem einzigen Draht bestehen kann oder aus einer Vielzahl von verseilten Drähten und dergleichen, in einem Extruder 12 in bekannter Art und Weise mit einem Kabelmantel 14 versehen wird. Das Material ist zum Beispiel ein vernetzbarer Kunststoff, z.B. VPE oder eine vulkanisierbare Gummimischung, z.B. EPR. In einem weiteren Extruder 16 wird eine Hülle 18 um das Kabel 20 herum erzeugt. Das Material der Hülle 18 kann gegenüber dem für den Kabelmantel 14 sehr unterschiedlich sein. Es muss nur die Voraussetzungen erfüllen, die die innerhalb der Hülle 18 stattfindende Vernetzung des Materials des Kabelmantels 14 erfordert. Es ist möglich, die Hülle 18 unmittelbar auf den sich vorbewegenden Kabelmantel 14 zu extrudieren, so dass zwischen beiden Teilen eine innige Anlage besteht. Im gezeichneten Fall ist ein ringzylindrischer Zwischenraum 22 vorgesehen. In den Zwischenraum 22 kann Gas unter Druck, z.B. Stickstoff oder Wasserdampf eingeleitet werden oder auch eine Flüssigkeit drucklos oder unter Druck. Mit Hilfe des Gases oder der Flüssigkeit oder auf eine andere nicht gezeigte, jedoch bekannte Art und Weise wird der Kabelmantel 14 erwärmt, damit er nach einer gewissen Zeit auf eine Vernetzungs- oder Vulkanisationstemperatur von z.B. 190°C in jedem Volumenanteil gebracht wird. Diese Temperatur ist normalerweise für das Vernetzen des Kabelmaterials notwendig. Der Druck im Zwischenraum 22 sorgt nun dafür, dass bei Erwärmung im Kabelmantel 14 keine Gase entstehen, die eine Blasenbildung im Kabelmantel 14 verursachen.

Ab einer bestimmten Kabellänge hinter dem Extruder 16 nach erfolgter Vernetzung und Abkühlung kann die Hülle 18 wieder entfernt und das Material erneut zur Herstellung einer neuen Hülle oder zu anderen Zwecken verwendet werden. Es ist auch möglich, die Hülle am Kabel zu belassen, wobei es für diesen Fall zweckmäßig ist, wenn die Hülle unmittelbar am Kabelmantel anliegt. In diesem Fall kann die Hülle als mechanischer oder Feuchtigkeitsschutz dienen, zur Abschirmung herangezogen werden, indem sie leitend gemacht wird, oder auch als Rückleiter dienen.

In der Ausführungsform nach Fig. 1 ist ein Druckbehälter 24 vorgesehen, der den Zwischenraum zwischen den Extrudern 12, 16 dicht abschließt und in dem ein höherer Druck erzeugt wird. Der Druck entspricht annähernd dem erforderlichen Gegendruck für den partiellen Gasdruck im Kabelmantel 14.

Da das in Fig. 2 erzeugte Kabel 20 den gleichen Aufbau hat wie das Kabel 20 nach Fig. 1, werden auch gleiche Bezugszeichen für den Leiter 10 und den Kabelmantel 14 verwendet. In Fig. 2 ist ein einziger Extruder 30 vorgesehen, mit dem sowohl der Kabelmantel 14 extrudiert wird als auch eine Hülle 32, die der Hülle 18 vergleichbar ist. Zwischen Kabelmantel 14 und Hülle 22 befindet sich wiederum ein Zwischenraum 34, welcher dem Zwischenraum 22 gleicht. Die zur Ausführungsform nach Fig. 1 beschriebenen Verfahrensmaßnahmen und möglichkeiten gelten für die Ausführungsform nach Fig. 2 gleichermaßen, so dass diese im Einzelnen nicht noch einmal erläutert werden sollen.

## Patentansprüche

1. Verfahren zur Herstellung eines Kabels mit mindestens einem Leiter (10) und mindestens einem den Leiter (10) umgebenden Mantel (14) aus isolierendem Kunststoffmaterial, bei dem das Kunststoffmaterial durch Extrusion auf den Leiter (10) aufgebracht und in einer rohr- oder schlauchartigen Hülle (48, 32) durch Zufuhr von Wärme vernetzt bzw. vulkanisiert wird, **dadurch gekennzeichnet, dass** die rohr- oder schlauchartige Hülle (18, 32) unmittelbar nach der Extrusion fortlaufend oder durch Koextrusion mit dem Kabelmantel um den Kabelmantel (14) herum erzeugt wird, und vor der Vernetzung bzw. Vulkanisation des Materials des Kabelmantels so in innigem Kontakt mit dem Kabelmantel gebracht wird, dass aufgrund der Temperaturerhöhung ein Gegendruck auf dem Kabelmantel erzeugt wird, der trotz des partiellen Gasdrucks nicht zur Gasbläschenbildung im Kabelmantel führt.

2. Verfahren zur Herstellung eines Kabels mit mindestens einem Leiter (10) und mindestens einem den Leiter (10) umgebenden Mantel (14) aus isoliertem Kunststoffmaterial, bei dem das Kunststoffmaterial durch Extrusion auf den Leiter (10) aufgebracht und in einer rohrartigen oder schlauchförmigen Hülle (18, 32) durch Zufuhr von Wärme vernetzt bzw. vulkanisiert wird, **dadurch gekennzeichnet, dass** das die rohr- oder schlauchförmige Hülle (18, 32) unmittelbar nach der Extrusion fortlaufend oder durch Koextrusion mit dem Kabelmantel um den Kabelmantel (14) herum erzeugt wird, und vor der Vernetzung bzw. Vulkanisation des Materials des Kabelmantels in einem radialen Abstand zu diesem aufgebracht wird, ein gasförmiges, flüssiges oder festes Medium zwischen Hülle und Kabelmantel eingeführt wird, das einen Gegendruck auf den Kabelmantel erzeugt, sodass der bei der Vernetzung oder Vulkanisation ansteigende partielle Gasdruck im Kabelmantel nicht zur Gasbläschenbildung im Kabelmantel führt.

3. Verfahren nach einem oder beiden Ansprüchen 1 bis 2, **dadurch gekennzeichnet, dass** die Hülle (18, 32) ganz oder teilweise durch Extrusion erzeugt wird.

4. Verfahren nach einem oder mehreren der Ansprüche 1 bis 3, **dadurch gekennzeichnet, dass** ein gasförmiges Medium oder Dampf unter Druck zwischen Hülle (18, 32) und Kabelmantel (14) eingeleitet wird.

5. Verfahren nach einem oder mehreren der Ansprüche 1 bis 3, **dadurch gekennzeichnet, dass** ein gasförmiges, ein flüssiges, ein festes Medium oder eine Kombination von diesen zwischen Hülle und Kabelmantel eingeleitet wird.

6. Verfahren nach einem oder mehreren der Ansprüche 1 bis 3, **dadurch gekennzeichnet, dass** ein gasförmiges, ein flüssiges, ein festes Medium oder eine Kombination von diesen zwischen Hülle und Kabelmantel eingeleitet wird, das geeignet ist, den bei der Vernetzung oder Vulkanisation der Ader erforderlichen Druck aufzubauen oder aufrechtzuerhalten.

7. Verfahren nach einem oder mehreren der Ansprüche 1 bis 6, **dadurch gekennzeichnet, dass** das Material oder ein Teil des Materials der Hülle so strukturiert ist bzw. eine Vielzahl von feinen Durchlässen aufweist, wodurch ein späteres Entgasen des Kabelmantels ermöglicht wird.

8. Verfahren nach einem oder mehreren der Ansprüche 1 bis 7, **dadurch gekennzeichnet, dass** der Leiter (10) so aufgebaut ist, dass ein späteres Entgasen des Kabelmantels ganz oder teilweise über diesen erfolgen kann.

9. Verfahren nach einem oder mehreren der Ansprüche 1 bis 8, **dadurch gekennzeichnet, dass** die Hülle oder ein Teil der Hülle elektrisch leitend oder halbleitend ist zur Bildung eines Rückleiters bzw. einer Abschirmung.

10. Verfahren nach einem oder mehreren der Ansprüche 1 bis 9, **dadurch gekennzeichnet, dass** die Hülle oder ein Teil der Hülle als mechanischer Schutz oder als Schutz gegen Eindringen von Wasser oder Feuchtigkeit ausgebildet ist.

11. Verfahren nach einem oder mehreren der Ansprüche 1 bis 10, **dadurch gekennzeichnet, dass** die Hülle als ganz oder teilweise entfernbar ausgebildet ist.

12. Verfahren nach Anspruch 11, **dadurch gekennzeichnet, dass** das Material der Hülle wieder- oder weiterverwendbar ist.

13. Verfahren nach einem oder mehreren der Ansprüche 1 bis 12, **dadurch gekennzeichnet, dass** die Hülle unmittelbar im Anschluss an die Extrusion oder in einem späteren Arbeitsgang aufgebracht wird.

14. Verfahren nach einem oder mehreren der Ansprüche 1 bis 13, **dadurch gekennzeichnet, dass** die Hülle aus mehreren Schichten aufgebaut ist.

15. Verfahren nach einem oder mehreren der Ansprüche 1 bis 14, **dadurch gekennzeichnet, dass** ein Gas, ein flüssiges oder festes Medium unter Druck zwischen benachbarten Schichten der Hülle eingebracht wird.

16. Verfahren nach einem oder mehreren der Ansprüche 1 bis 15, bei dem ein Gas, ein flüssiges oder ein festes Medium zwischen benachbarten Schichten der Hülle eingebracht wird, das geeignet ist, während der Vernetzung oder Vulkanisation den erforderlichen Gegendruck aufzubauen oder aufrechtzuerhalten.

17. Verfahren nach einem oder mehreren der Ansprüche 1 bis 16, **dadurch gekennzeichnet, dass** die Hülle zumindest teilweise durch Wickeln, Flechten, Umbändern oder dergleichen eines geeigneten Materials erzeugt wird.

18. Verfahren nach einem oder mehreren der Ansprüche 1 bis 17, **dadurch gekennzeichnet, dass** die Hülle armiert wird, vorzugsweise mit metallischem Material.

19. Verfahren nach einem oder mehreren der Ansprüche 1 bis 18, **dadurch gekennzeichnet, dass** die Hülle ganz oder teilweise als gewelltes Rohr erzeugt wird.

20. Verfahren nach einem oder mehreren der Ansprüche 1 bis 19, **dadurch gekennzeichnet, dass** die Erwärmung des Kabelmantels zum Zwecke der Vernetzung oder Vulkanisation durch Strahlung, Kontaktwärme, induktive Erwärmung, Hochfrequenzeinstrahlung, Dampf oder durch eine Kombination aus diesen erfolgt.

21. Verfahren nach einem oder mehreren der Ansprüche 1 bis 19, **dadurch gekennzeichnet, dass** die Erwärmung zum Zwecke der Vernetzung oder Vulkanisation des Kabelmantels ganz oder teilweise durch Stromfluss im Leiter erfolgt.

22. Verfahren nach Anspruch 21, **dadurch gekennzeichnet, dass** die Erwärmung zum Zwecke der Vernetzung oder Vulkanisation des Kabelmantels ganz oder teilweise durch Strombelastung des Kabels zu einem späteren Zeitpunkt oder im Betrieb erfolgt.

23. Verfahren nach einem oder mehreren der Ansprüche 1 bis 22, **dadurch gekennzeichnet, dass** die Herstellung des Kabels auf mobilen Einheiten wie Fahrzeugen oder Schiffen erfolgt.

24. Verfahren nach einem oder mehreren der Ansprüche 1 bis 23, **dadurch gekennzeichnet, dass** die Herstellung des Kabels auf mobilen Einheiten direkt am Verlegeort des Kabels erfolgt.

## Claims

1. A method for the manufacture of a cable having at least one conductor (10) and at least one sheath (14) surrounding the conductor (10) which is made of an insulating plastic material, wherein the plastic material is applied to the conductor (10) by extrusion and is cross-linked or cured in a tube-like or hose-like envelope (18, 32) by supplying heat thereto, **characterized in that**, directly after the extrusion, the tube-like or hose-like envelope (18, 32) is produced around the cable sheath (14) continuously or through co-extrusion with the cable sheath (14), and is brought into an intimate contact with the cable sheath before the cross-linking or curing of the material of the cable sheath, such that a counterpressure is generated on the cable sheath due to the increase of temperature, the counterpressure not causing the formation of bubbles of gas in the cable sheath despite the partial gas pressure.

2. A method for the manufacture of a cable having at least one conductor (10) and at least one sheath (14) surrounding the conductor (10) which is made of an insulating plastic material, wherein the plastic material is applied to the conductor (10) by extrusion and is cross-linked or cured in a tube-like or hose-shaped envelope (18, 32) by supplying heat thereto, **characterized in that**, directly after the extrusion, the tube-shaped or hose-shaped envelope (18, 32) is produced around the cable sheath (14) continuously or through co-extrusion with the cable sheath (14), and is applyed at a radial distance therefrom before the cross-linking or curing of the material of the cable sheath, a gaseous, liquid or solid medium is introduced between envelope and cable sheath, the medium generating a counterpressure onto the cable sheath such that the partial gas pressure increasing during the cross-linking or curing does not cause the formation of bubbles of gas in the cable sheath.

3. The method as claimed in one or either of claims 1 to 2, **characterized in that** the envelope (18, 32) is wholly or partly produced by extrusion,

4. The method as claimed in one or more of claims 1 to 3, **characterized in that** a gaseous medium or steam is introduced under a pressure in between the envelope (18, 32) and cable sheath (14).

5. The method as claimed in one or more of claims 1 to 3, **characterized in that** a gaseous medium, liquid medium, solid medium or a combination thereof is introduced in between the envelope and cable sheath.

6. The method as claimed in one or more of claims 1 to 3, **characterized in that** a gaseous medium, liquid medium, solid medium or a combination thereof is introduced in between the envelope and cable sheath that is apt to build up or maintain the pressure required in cross-linking or curing the core.

7. The method as claimed in one or more of claims I to 6, **characterized in that** the material or some part of the material of said envelope is structured or has a multiplicity of fine passages such as to permit the cable sheath to be relieved from gas later.

8. The method as claimed in one or more of claims 1 to 7, **characterized in that** the conductor (10) is of a design such that the cable sheath may wholly or partly be relieved from gas later via said conductor.

9. The method as claimed in one or more of claims 1 to 8, **characterized in that** said envelope or some part of said envelope is electrically conductive or semiconductive to form a return conductor or shield.

10. The method as claimed in one or more of claims 1 to 9, **characterized in that** said envelope or some part of said envelope is configured as a mechanical protection or a protection preventing the penetration of water or moisture.

11. The method as claimed in one or more of claims 1 to 10, **characterized in that** said envelope is configured to be wholly or partly removable.

12. The method as claimed in claim 11, **characterized in that** the material of said envelope is re-usable or further usable.

13. The method as claimed in one or more of claims 12, **characterized in that** said envelope is applied directly subsequent to extrusion or in a later operation.

14. The method as claimed in one or more of claims 1 to 13, **characterized in that** said envelope is built up from a plurality of layers.

15. The method as claimed in one or more of claims 1 to 14, **characterized in that** a gas, liquid medium or solid medium is introduced under a pressure in between adjacent layers of the envelope.

16. The method as claimed in one or more of claims 1 to 15, wherein a gas, liquid medium or solid medium is introduced in between adjacent layers of the envelope that is apt to build up or maintain the required counterpressure during cross-linking or curing.

17. The method as claimed in one or more of claims 1 to 16, **characterized in that** said envelope is produced at least in part by winding, braiding, taping or the like of an appropriate material.

18. The method as claimed in one or more of claims 1 to 17, **characterized in that** said envelope is armored, preferably by a metallic material.

19. The method as claimed in one or more of claims 1 to 18, **characterized in that** said envelope is produced wholly or partly as a corrugated tube.

20. The method as claimed in one or more of claims 1 to 19, **characterized in that** the heating of said cable sheath is performed by radiation, contact heat, inductive heating, high-frequency irradiation, steam or a combination thereof, for the purpose of cross-linking or curing.

21. The method as claimed in one or more of claims 1 to 19, **characterized in that** said heating is performed wholly or partly by a flow of current in the conductor, for the purpose of cross-linking or curing said cable sheath.

22. The method as claimed in claim 21, **characterized in that** said heating is performed wholly or partly by loading the cable by a current at a later time or when in operation, for the purpose of cross-linking or curing said cable sheath.

23. The method as claimed in one or more of claims 1 to 22, **characterized in that** said cable is manufactured on mobile units such as vehicles or ships.

24. The method as claimed in one or more of claims 1 to 23, **characterized in that** said cable is manufactured on mobile units directly at the site of cable installation.

## Revendications

1. Procédé de production d'un câble, avec au moins un conducteur (10) et au moins une gaine (14) entourant le conducteur (10) et faite d'un matériau en matière plastique isolant, dans lequel le matériau en matière plastique est appliqué sur le conducteur (10) par extrusion et est réticulé ou respectivement vulcanisé par application de chaleur dans une enveloppe (48, 32) en forme de tube ou tuyau, **caractérisé en ce que** l'enveloppe (18, 32) en forme de tube ou tuyau est formée autour de la gaine de câble (14) continûment ou par coextrusion avec la gaine de câble, immédiatement après l'extrusion, et qu'elle est menée en un contact intime avec la gaine de câble avant la réticulation ou respectivement vulcanisation du matériau de la gaine de câble, tellement que dû à l'accroissement de température, une contre-pression est générée sur la gaine de câble qui ne résulte pas en une génération de vésicules de gaz dans la gaine de câble malgré de la pression partielle de gaz.

2. Procédé de production d'un câble, avec au moins un conducteur (10) et au moins une gaine (14) entourant le conducteur (10) et faite d'un matériau en matière plastique isolant, dans lequel le matériau en matière plastique est appliqué sur le conducteur (10) par extrusion et est réticulé ou respectivement vulcanisé par application de chaleur dans une enveloppe (18, 32) tubulaire ou en forme de tuyau, **caractérisé en ce que** l'enveloppe (18, 32) en forme de tube ou tuyau est formée autour de la gaine de câble (14) continûment ou par coextrusion avec la gaine de câble, immédiatement après l'extrusion, et qu'elle est appliquée avant la réticulation ou respectivement vulcanisation du matériau de la gaine de câble dans une distance radiale de ladite gaine, un milieu gazeux, liquide ou solide est introduit entre l'enveloppe et la gaine de câble qui génère une contre-pression sur la gaine de câble, de sorte que la pression partielle de gaz dans la gaine de câble qui croît pendant la réticulation ou vulcanisation ne résulte pas en une génération de vésicules de gaz dans la gaine de câble.

3. Procédé selon une ou les deux revendications 1 à 2, **caractérisé en ce que** l'enveloppe (18, 32) est générée entièrement ou partiellement par extrusion.

4. Procédé selon une ou plusieurs des revendications 1 à 3, **caractérisé en ce que** un milieu gazeux ou de la vapeur est introduit entre l'enveloppe (18, 32) et la gaine de câble (14) sous pression.

5. Procédé selon une ou plusieurs des revendications 1 à 3, **caractérisé en ce que** un milieu gazeux, liquide, solide ou une combinaison de ceux-ci est introduit entre l'enveloppe et la gaine de câble.

6. Procédé selon une ou plusieurs des revendications 1 à 3, **caractérisé en ce que** un milieu gazeux, liquide, solide ou une combinaison de ceux-ci est introduit entre l'enveloppe et la gaine de câble qui est susceptible à maintenir ou développer la pression qui est nécessaire dans la réticulation ou vulcanisation du brin.

7. Procédé selon une ou plusieurs des revendications 1 à 6, **caractérisé en ce que** le matériau ou une part du matériau de l'enveloppe est tellement structuré ou respectivement présente une multitude de passages fins afin de permettre ainsi un dégazage subséquent de la gaine de câble.

8. Procédé selon une ou plusieurs des revendications 1 à 7, **caractérisé en ce que** le conducteur (10) est tellement construit que un dégazage subséquent de la gaine de câble peut prendre place entièrement ou partiellement au travers de ceci.

9. Procédé selon une ou plusieurs des revendications 1 à 8, **caractérisé en ce que** l'enveloppe ou une part de l'enveloppe est électriquement conducteur ou semiconducteur afin de former un conducteur de retour ou un blindage.

10. Procédé selon une ou plusieurs des revendications 1 à 9, **caractérisé en ce que** l'enveloppe ou une part de l'enveloppe est formée comme une protection mécanique ou comme protection contre l'intrusion d'eau ou de humidité.

11. Procédé selon une ou plusieurs des revendications 1 à 10, **caractérisé en ce que** l'enveloppe est formée de façon entièrement ou partiellement démontable.

12. Procédé selon la revendication 11, **caractérisé en ce que** le matériau de l'enveloppe est recyclable ou réutilisable.

13. Procédé selon une ou plusieurs des revendications 1 à 12, **caractérisé en ce que** l'enveloppe est appliquée directement à la suite de l'extrusion ou dans une opération subséquente.

14. Procédé selon une ou plusieurs des revendications 1 à 13, **caractérisé en ce que** l'enveloppe est construite de plusieurs couches.

15. Procédé selon une ou plusieurs des revendications 1 à 14, **caractérisé en ce que** un gaz, un milieu liquide ou solide est introduit entre des couches avoisinantes de l'enveloppe.

16. Procédé selon une ou plusieurs des revendications 1 à 15, dans lequel un gaz, un milieu liquide ou solide est introduit entre des couches avoisinantes de l'enveloppe qui est susceptible à développer ou maintenir la contre-pression nécessaire pendant la réticulation ou vulcanisation.

17. Procédé selon une ou plusieurs des revendications 1 à 16, **caractérisé en ce que** l'enveloppe est formée au moins partiellement par enroulement, tressage, enrubannage ou opération semblable d'un matériau adéquat.

18. Procédé selon une ou plusieurs des revendications 1 à 17, **caractérisé en ce que** l'enveloppe est armée, de préférence par un matériau métallique.

19. Procédé selon une ou plusieurs des revendications 1 à 18, **caractérisé en ce que** l'enveloppe est entièrement ou partiellement générée comme un tube ondulé.

20. Procédé selon une ou plusieurs des revendications 1 à 19, **caractérisé en ce que** le chauffage de la gaine de câble afin de la réticulation ou vulcanisation prend place par irradiation, chaleur de contact, chauffage inductif, irradiation de haute fréquence, vapeur ou par une combinaison de ceux-ci.

21. Procédé selon une ou plusieurs des revendications 1 à 19, **caractérisé en ce que** le chauffage afin de la réticulation ou vulcanisation de la gaine de câble prend place entièrement ou partiellement par courant électrique dans le conducteur.

22. Procédé selon la revendication 21, **caractérisé en ce que** le chauffage afin de la réticulation ou vulcanisation de la gaine de câble prend place entièrement ou partiellement par charge électrique du câble dans un moment subséquent ou dans l'opération.

23. Procédé selon une ou plusieurs des revendications 1 à 22, **caractérisé en ce que** la production du câble prend place sur des unités mobiles comme des véhicules ou bateaux.

24. Procédé selon une ou plusieurs des revendications 1 à 23, **caractérisé en ce que** la production du câble prend place sur des unités mobiles directement dans l'endroit d'installation du câble.
